(19) Europäisches Patentamt
European Patent Office
Office européen des brevets

(11) **EP 2 506 168 A1**

(12) **EUROPEAN PATENT APPLICATION**

(43) Date of publication:
**03.10.2012 Bulletin 2012/40**

(51) Int Cl.:
***G06F 17/30*** (2006.01)     ***G06F 9/50*** (2006.01)

(21) Application number: **12161595.9**

(22) Date of filing: **27.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.03.2011 TW 100110516**

(71) Applicant: **Hon Hai Precision Industry Co., Ltd.
New Taipei City (TW)**

(72) Inventors:
• **Peng, Kuan-Chiao
Tu-Cheng, New Taipei (TW)**
• **Lin, Yen-Hung
Tu-Cheng, New Taipei (TW)**
• **Lee, Chung-I
Tu-Cheng, New Taipei (TW)**
• **Yeh, Chien-Fa
Tu-Cheng, New Taipei (TW)**

(74) Representative: **Gray, John James
Murgitroyd & Company
Scotland House
165-169 Scotland Street
Glasgow G5 8PL (GB)**

(54) **Data sorting system and method**

(57) A remote computer and method sort data obtained from cloud servers of a data center. The remote computer obtains the data from the cloud servers and inserts the obtained data into one or more table. The remote computer sorts the data stored in the one or more table by a structure sorting algorithm. The remote computer stores the sorted data into a database electronically connected to the remote computer.

```
              ( Begin )
                  │
                  ▼
┌─────────────────────────────────────────────┐
│ Assigning an IP address by a DHCP service     │  S10
│ to each of cloud servers of a data center to  │
│ communicate with the cloud server             │
└─────────────────────────────────────────────┘
                  │
                  ▼
┌─────────────────────────────────────────────┐
│ Obtaining data from the cloud server and      │  S20
│ inserting the data into one or more original  │
│ tables                                         │
└─────────────────────────────────────────────┘
                  │
                  ▼
┌─────────────────────────────────────────────┐
│ Sorting the data stored in the one or more    │  S30
│ original tables by a structure sorting         │
│ algorithm                                      │
└─────────────────────────────────────────────┘
                  │
                  ▼
┌─────────────────────────────────────────────┐
│ Storing the sorted data into a database        │  S40
└─────────────────────────────────────────────┘
                  │
                  ▼
               ( End )
```

**FIG. 3**

EP 2 506 168 A1

## Description

### BackGround

Embodiments of the present disclosure relate to data processing technology, and particularly to a data sorting system and method.

A data center is a facility which houses a large number of computers and stores huge amounts of data. Data sorting procedures greatly influence the performance of the data center. However, when a user inputs a keyword to search data stored in the data center, much irrelevant data is provided as well as the required data. If the data is sorted well, the user may spend less time accessing the data center. More useful and convenient methods to sort data obtained from the data center are desired by the user.

### Summary

According to one aspect of the disclosure, a remote computer in electronic communication with cloud servers of a data center is provided. The remote computer includes a storage system, at least one processor, and one or more programs stored in the storage system and being executable by the at least one processor, the one or more programs comprising: an assignment module operable to assign an IP address by a dynamic host configuration protocol (DHCP) service of the remote computer to each of the cloud servers to communicate with each of the cloud servers; an obtaining module operable to obtain data from the cloud servers and insert the obtained data into one or more tables; a sorting module operable to sort the data stored in the one or more tables by a structure sorting algorithm; a storing module operable to store the sorted data into a database electronically connected to the remote computer.

According to another aspect of the disclosure, a computer-based data sorting method is provided. The computer-based data sorting method includes assigning an IP address by a dynamic host configuration protocol (DHCP) service of the remote computer to each of cloud servers to communicate with each of the cloud servers, obtaining data from the cloud servers and inserting the obtained data into one or more tables, sorting the data stored in the one or more tables by a structure sorting algorithm, and storing the sorted data into a database electronically connected to the remote computer.

According to a further aspect of the disclosure, a non-transitory computer-readable medium is provided. The non-transitory computer-readable medium has stored instructions that, when executed by a processor of a remote computer, causes the processor to perform the computer-based data sorting method as described above. For example, the storage medium is a non-transitory storage medium.

According to a still further aspect of the disclosure, a computer program product is provided. The computer program product having machine readable instructions, which, when executed by an electronic device, causes the remote computer to perform the related terms search method as described above.

### BRIEF DESCRIPTION OF THE DRAWINGS

FIG. 1 is a system view of one embodiment of a data sorting system.

FIG. 2 is a block diagram of one embodiment of a remote computer included in FIG.1.

FIG. 3 is a flowchart of one embodiment of a data sorting method.

### DETAILED DESCRIPTION

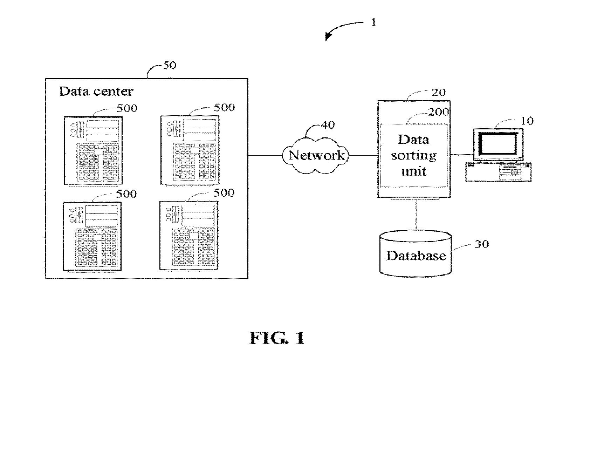

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one. It may be understood that the term, "data" may refer to a single data item or may refer to a plurality of data items. These terms, with reference to FIGs 1-3, will be described in greater detail below.

In general, the word "module", as used herein, refers to logic embodied in hardware or firmware, or to a collection of software instructions, written in a programming language, such as, Java, C, or assembly. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable media include CDs, DVDs, BLU-RAY, flash memory, and hard disk drives.

FIG. 1 is a system view of one embodiment of a data sorting system 1. In one embodiment, the data sorting system 1 may include a remote computer 20 and a data center 50. The data center 50 is designed for cloud computing capability and capacity and includes a plurality of cloud servers 500. The remote computer 20 is connected to the data center 50 via a network 40. The network 40 may be, but is not limited to, a wide area network (e.g., the Internet) or a local area network. The data sorting system 1 may be used to sort data which are obtained from each of the cloud servers 500.

The remote computer 20 is installed with a pre-boot execute environment (PXE) service. The remote computer 20 can boot the cloud servers 500 by the PXE service. The cloud servers 500 store data. The data may show performance of the cloud servers 500 and be generated by the cloud servers 500 itself when the cloud servers 500 run. For example, the data includes a serial number of each cloud server 500, a voltage of the cloud server 500, a rotational speed of a fan of the cloud server 500, a temperature of the cloud server 500, a status of the cloud server 500 (e.g., power on/off) and time when the data is generated.

The remote computer 20, in one example, can be also a dynamic host configuration protocol (DHCP) server. The remote computer 20 is installed with a DHCP service. In one embodiment, the remote computer 20 assigns IP addresses to the cloud servers 500 by the DHCP service. The remote computer 20 may provide three modes for allocating IP addresses to the cloud servers 500. The modes are dynamic allocation, automatic allocation, and static allocation. In one embodiment, the remote computer 20 uses dynamic allocation to assign the IP addresses to the cloud servers 500. For example, when the remote computer 20 receives a request from a cloud server 500 via the network 40, the remote computer 20 dynamically assigns an IP address, and offers the remote computer 20 with the IP address. In one embodiment, the remote computer 20 may be a personal computer (PC), a network server, or any other data-processing equipment.

The remote computer 20 electronically connects to a database system 30 using open database connectivity (ODBC) or java database connectivity (JDBC), for example. The database system 30 may store the data which is sorted by the remote computer 20. Additionally, each of the one or more client computers 10 provides an operation interface for controlling one or more operations of the remote computer 20.

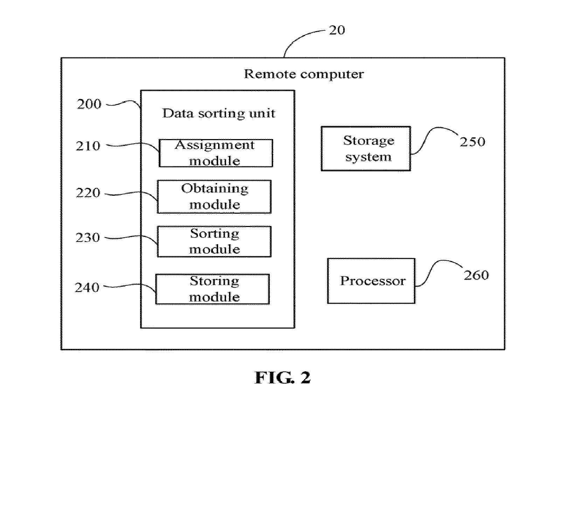

FIG. 2 is a block diagram of one embodiment of the remote computer 20. The remote computer 20 includes a data sorting unit 200. The data sorting unit 200 may be used to sort data obtained from the cloud servers 500. In one embodiment, the remote computer 20 includes a storage system 250, and at least one processor 260. In one embodiment, the data sorting unit 20 includes an assignment module 210, an obtaining module 220, a sorting module 230, and a storing module 240. The modules 210-240 may include computerized code in the form of one or more programs that are stored in the storage system 250. The computerized code includes instructions that are executed by the at least one processor 260 to provide functions for the modules 210-240. The storage system 250 may be a cache or a dedicated memory, such as an EPROM, HDD, or flash memory.

The assignment module 210 assigns an IP address by the DHCP service to each of the cloud servers 500 of the data center 50 to communicate with each of the cloud servers 500.

The obtaining module 220 obtains the data from the cloud servers 500 and inserts the data into one or more tables. The table(s) is predetermined by a user according to the data stored in the cloud servers 500. For example, the user predetermines each of the tables having five columns and four rows. In one embodiment, the obtaining module 220 inserts the data obtained at a specific time into an table stored in the database 30. The table(s) store the data obtained from the cloud servers 500 in a row and column format. For example, the data obtained from the cloud servers A, B and C at a single time $T_i$ is inserted into one table. The table may include five columns and four rows as follows:

| Serial number of the cloud server | Voltage | Rotational speed | Temperature | Power On/Off |
| --- | --- | --- | --- | --- |
| Cloud server A | 3.280 V | 6240 | 42 | ON |
| Cloud server B | 4.880 V | 6410 | 39 | ON |
| Cloud server C | 11.920 V | 6720 | 38 | ON |

The sorting module 230 sorts the obtained data by a structure sorting algorithm. It is understood that the structure sorting algorithm sorts the obtained data into a linear data, a table data, and a time dimension data according to the table.

The linear data is made up of every row and column of the table except a first column and a first row of the table. The number of the row and column may be changed based on the table. For example, if the table includes five columns and four rows, then linear data includes seven items and does not infill a first column and a first row of the table. The linear data may include data obtained at the time $T_i$ as follows:

$$T_i\,(0 \leq i \leq \infty) = \begin{array}{l} \mathrm{row1} : \left[ \{0,0\}_i \quad \{0,1\}_i \quad \{0,2\}_i \quad \{0,3\}_i \right] \\ \mathrm{row2} : \left[ \{1,0\}_i \quad \{1,1\}_i \quad \{1,2\}_i \quad \{1.3\}_i \right] \\ \mathrm{row3} : \left[ \{2,0\}_i \quad \{2,1\}_i \quad \{2,2\}_i \quad \{2,3\}_i \right] \\ \mathrm{col1} : \left[ \{0,0\}_i \quad \{1,0\}_i \quad \{2,0\}_i \right] \\ \mathrm{col2} : \left[ \{0,1\}_i \quad \{1,1\}_i \quad \{2,1\}_i \right] \\ \mathrm{col3} : \left[ \{0,2\}_i \quad \{1,2\}_i \quad \{2,2\}_i \right] \\ \mathrm{col4} : \left[ \{0,3\}_i \quad \{1,3\}_i \quad \{2,3\}_i \right] \end{array}$$

In one embodiment, row1 is equal to [3.280, 6240, 42, ON], row2 is equal to 4.880, 6410, 39, ON], row3 is equal to [11.920, 6720, 38, ON], col1 is equal to [3.280, 4880, 11.920], col2 is equal to [6240, 6410, 6720], col3 is equal to [42, 39, 38], col4 is equal to [ON, ON, ON]. Additionally, each item in the linear data can be independently searched. For example, if a user searches row1 in the linear data via the client computer 10, the row1 is shown independently in a display device of the client computer 10.

The table data is made up of every row of the table except the first row of the table. The table data may include data obtained at the time $T_i$ as following:

$$T_i(0 \leq i \leq \infty) = \begin{bmatrix} \{0,0\}_i & \{0,1\}_i & \{0,2\}_i & \{0,3\}_i \\ \{1,0\}_i & \{1,1\}_i & \{1,2\}_i & \{1,3\}_i \\ \{2,0\}_i & \{2,1\}_i & \{2,2\}_i & \{2,3\}_i \end{bmatrix}$$

Each table data is integrated into one item. If the user searches a table data obtained at the time $T_i$, the entire table data is shown at the display device of the client computer 10. For example, assuming that the table data is equal to

$$T_i = \begin{bmatrix} 3.280 & 6240 & 42 & ON \\ 4.880 & 6410 & 39 & ON \\ 11.920 & 6720 & 38 & ON \end{bmatrix}$$

if the user searches the table data via the client computer 10, then

$$T_i = \begin{bmatrix} 3.280 & 6240 & 42 & ON \\ 4.880 & 6410 & 39 & ON \\ 11.920 & 6720 & 38 & ON \end{bmatrix}$$

is shown in the display of the client computer 10.

The time dimension data is made up of one or more table data. The time dimension data is integrated by one or more table data. The time-dimension data is the integration of one or more items of table data. The time-dimension data may include data as follows: $T=[T_i, \ldots T_{i+n}]$. If the user searches a time-dimension data via the client computer 10, the table data from $T_i$ to $T_{i+n}$ is shown at the display device of the client computer 10.

The storing module 240 stores the sorted data into a database 30. In one embodiment, the storing module 240 stores the linear data, the table data and the time dimension table into the database 30.

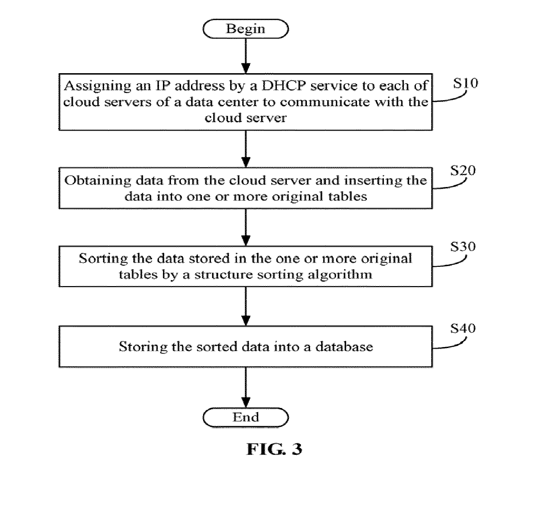

FIG. 3 is a flowchart of one embodiment of a data sorting method. Depending on the embodiment, additional blocks may be added, others deleted, and the ordering of the blocks may be changed.

In block S10, the assignment module 210 assigns an IP address by the DHCP service to each of the cloud servers 500 of the data center 50 to communicate with each of the cloud servers 500.

In block S20, the obtaining module 220 obtains data from the cloud servers 500. A user can set parameters to obtain particular data from one or more cloud servers 500. The parameters may include a serial number of each of the cloud servers 500. The user can decide to obtain data from particular servers of the cloud servers 500 by setting the serial numbers of the cloud servers 500. For example, assuming that the data center 50 includes four cloud servers 500, the serial numbers of the four cloud servers 500 are respectively denoted A, B, C and D. If the user sets the serial numbers A, B, C and D in the remote computer 20, the obtaining module 220 obtains data from all of the four cloud servers A, B, C and D, if the user sets the serial number A in the remote computer 20, then the obtaining module 220 obtains data only from the cloud server A. In one embodiment, the obtaining module 220 also inserts the data obtained at a specific time into one or more tables for storage in the database 30. It is understood that the table includes the data from the cloud servers 500. For example, the data from the cloud server A, B and C obtained at a time $T_i$ is filled into one table. The table may include five columns and four rows as follows:

| Serial number of the cloud server | Voltage | Rotational speed | Temperature | Power On/Off |
|---|---|---|---|---|
| Cloud server A | 3.280 V | 6240 | 42 | ON |
| Cloud server B | 4.880 V | 6410 | 39 | ON |
| Cloud server C | 11.920 V | 6720 | 38 | ON |

In block S30, the sorting module 230 sorts the data stored in the one or more table by a structure sorting algorithm. It is understood that the structure sorting algorithm sorts the data into a linear data, a table data and a time dimension data.

The linear data includes every row and column of the table except a first column and a first row of the table. The number of the row and column may be changed based on the table. For example, if the table includes five columns and four rows, then linear data includes seven items and a first column and a first row of the table is excluded.

The table data includes every row of the table except the first row of the table. For example, if the table includes four rows and five columns, the table data include three rows.

The time-dimension data consists of table data. The time-dimension data is the integration of one or more items of table data. For example, the sorting module 230 integrates the table data $T_i$ with table data $T_{i+n}$ into one item. If the user searches a time-dimension data, all the table data from $T_i$ to $T_{i+n}$ is shown at the display device of the client computer 10.

In block S40, the storing module 240 stores the sorted data into a database 30. In one embodiment, the linear data, the table data and the time dimension table is saved into the database 30.

Although certain inventive embodiments of the present disclosure have been specifically described, the present disclosure is not to be construed as being limited thereto. Various changes or modifications may be made to the present disclosure without departing from the scope and spirit of the present disclosure.

**Claims**

1. A remote computer, the remote computer in electronic communication with cloud servers of a data center, comprising:

a storage system;
at least one processor; and
one or more programs stored in the storage system and being executable by the at least one processor, the one or more programs comprising:

an assignment module operable to assign an IP address by a dynamic host configuration protocol (DHCP) service of the remote computer to each of the cloud servers to communicate with each of the cloud servers;
an obtaining module operable to obtain data from the cloud servers and insert the obtained data into one or more tables;
a sorting module operable to sort the data stored in the one or more tables by a structure sorting algorithm; and
a storing module operable to store the sorted data into a database electronically connected to the remote computer.

2. The remote computer of claim 1, wherein the structure sorting algorithm sorts the obtained data into a linear data, a table data, and a time dimension data according to the table.

3. The remote computer of claim 2, wherein the table stores the obtained data in a form of rows and columns, and the linear data is made up of every row and column of the table except a first column and a first row of the table.

4. The remote computer of claim 2, wherein the table stores the obtained data in a form of row and column, and the table data is made up of every row of the table except the first row of the table.

5. The remote computer of claim 2, wherein the time dimension data is made up of one or more table data.

6. A computer-based data sorting method being performed by execution of computer readable program code by a processor of a remote computer, the method comprising:

   assigning an IP address by a dynamic host configuration protocol (DHCP) service of the remote computer to each of cloud servers to communicate with each of the cloud servers;
   obtaining data from the cloud servers and inserting the obtained data into one or more tables;
   sorting the data stored in the one or more tables by a structure sorting algorithm; and
   storing the sorted data into a database electronically connected to the remote computer.

7. The method of claim 6, wherein the structure sorting algorithm sorts the obtained data into a linear data, a table data and a time dimension data according to the table.

8. The method of claim 7, wherein the table stores the obtained data in a form of rows and columns, and the linear data is made up of every row and column of the table except a first column and a first row of the table.

9. The method of claim 7, wherein the table stores the obtained data in a form of row and column, and the table data is made up of every row of the table except the first row of the table.

10. The method of claim 7, wherein the time dimension data is made up of one or more table data.

11. A non-transitory computer-readable medium having stored thereon instructions that, when executed by a remote computer, causing the remote computer to perform an data sorting method, the method comprising:

    assigning an IP address by a dynamic host configuration protocol (DHCP) service of the remote computer to each of cloud servers to communicate with each of the cloud servers;
    obtaining data from the cloud servers and inserting the obtained data into one or more tables;
    sorting the data stored in the one or more tables by a structure sorting algorithm; and
    storing the sorted data into a database electronically connected to the remote computer.

12. The non-transitory medium of claim 11, wherein the structure sorting algorithm sorts the obtained data into a linear data, a table data and a time dimension data according to the table.

13. The non-transitory medium of claim 12, wherein the table stores the obtained data in a form of rows and columns, and the linear data is made up of every row and column of the table except a first column and a first row of the table.

14. The non-transitory medium of claim 12, wherein the table stores the obtained data in a form of row and column, and the table data is made up of every row of the table except the first row of the table.

15. The non-transitory medium of claim 12, wherein the time dimension data is made up of one or more table data.

16. A computer program product having machine readable instructions, which, when executed by a remote computer, causes the remote computer to perform an data sorting method as claimed in any of claims 1 to 5.

**FIG. 1**

**FIG. 2**

Begin

Assigning an IP address by a DHCP service to each of cloud servers of a data center to communicate with the cloud server — S10

Obtaining data from the cloud server and inserting the data into one or more original tables — S20

Sorting the data stored in the one or more original tables by a structure sorting algorithm — S30

Storing the sorted data into a database — S40

End

**FIG. 3**

Europäisches
Patentamt

European
Patent Office

Office européen
des brevets

# EUROPEAN SEARCH REPORT

Application Number

EP 12 16 1595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEAN J ET AL: "MapReduce: Simplified Data Processing on Large Clusters", COMMUNICATIONS OF THE ASSOCIATION FOR COMPUTING MACHINERY , vol. 51, no. 1 31 January 2008 (2008-01-31), pages 107-113, XP002630192, ISSN: 0001-0782, DOI: 10.1145/1327452.1327492 Retrieved from the Internet: URL:http://portal.acm.org/citation.cfm?id= 1327452.1327492 [retrieved on 2008-01-01] * page 108 * * page 111 - page 112 * ----- | 1-16 | INV. G06F17/30 G06F9/50 |
| X | ARPACI-DUSSEAU A C ET AL: "HIGH-PERFORMANCE SORTING ON NETWORKS OF WORKSTATIONS", SIGMOD RECORD, ACM, NEW YORK, NY, US, vol. 26, no. 2, 1 June 1997 (1997-06-01), pages 243-254, XP000730510, ISSN: 0163-5808, DOI: 10.1145/253262.253322 * abstract * * page 243 * * page 248 * ----- -/-- | 1-16 | TECHNICAL FIELDS SEARCHED (IPC) G06F |

The present search report has been drawn up for all claims

| Place of search | Date of completion of the search | Examiner |
|---|---|---|
| Munich | 1 August 2012 | San-Bento Furtado, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EUROPEAN SEARCH REPORT**

Application Number

EP 12 16 1595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIZHE WANG ET AL: "Scientific Cloud Computing: Early Definition and Experience", HIGH PERFORMANCE COMPUTING AND COMMUNICATIONS, 2008. HPCC '08. 10TH IEEE INTERNATIONAL CONFERENCE ON, IEEE, PISCATAWAY, NJ, USA, 25 September 2008 (2008-09-25), pages 825-830, XP031344299, ISBN: 978-0-7695-3352-0 * abstract * * page 829 * * page 827 * ----- | 1-16 | |
| X | Bailey,D.,Vella, K.: "Towards Peer-to-Peer Virtualized Service Hosting, Discovery and Delivery", AP2PS 2010: The Second International Conference in P2P Systems, 25 October 2010 (2010-10-25), XP55034431, Florence, Italy Retrieved from the Internet: URL:http://www.thinkmind.org/download.php?articleid=ap2ps_2010_3_10_30034 [retrieved on 2012-08-01] * page 46 * * abstract * ----- -/-- | 1-16 | TECHNICAL FIELDS SEARCHED (IPC) |

The present search report has been drawn up for all claims

| Place of search | Date of completion of the search | Examiner |
|---|---|---|
| Munich | 1 August 2012 | San-Bento Furtado, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 12 16 1595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATTHIAS SCHMIDT ET AL: "Efficient Distribution of Virtual Machines for Cloud Computing", PARALLEL, DISTRIBUTED AND NETWORK-BASED PROCESSING (PDP), 2010 18TH EUROMICRO INTERNATIONAL CONFERENCE ON, IEEE, PISCATAWAY, NJ, USA, 17 February 2010 (2010-02-17), pages 567-574, XP031661266, ISBN: 978-1-4244-5672-7 * abstract * * page 567 * * page 571 * * page 573 * ----- | 1-16 | |
| X | DAVID ISAAC WOLINSKY ET AL: "On the Design of Virtual Machine Sandboxes for Distributed Computing in Wide-area Overlays of Virtual Workstations", VIRTUALIZATION TECHNOLOGY IN DISTRIBUTED COMPUTING, 2006. VTDC 2006. F IRST INTERNATIONAL WORKSHOP ON, IEEE, PI, 1 November 2006 (2006-11-01), pages 8-8, XP031132666, ISBN: 978-0-7695-2873-1 * page 2 - page 3 * * page 5 * ----- | 1-16 | TECHNICAL FIELDS SEARCHED (IPC) |

The present search report has been drawn up for all claims

| Place of search | Date of completion of the search | Examiner |
|---|---|---|
| Munich | 1 August 2012 | San-Bento Furtado, P |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

                   

& : member of the same patent family, corresponding
  document

EPO FORM 1503 03.82 (P04C01)